# EUROPEAN PATENT SPECIFICATION

(11) **EP 3 172 908 B1**
(45) Date of publication and mention of the grant of the patent: **06.04.2022**
(21) Application number: 15781401.3
(22) Date of filing: 09.07.2015
(51) Int. Cl.: H04W 4/24, H04L 12/14, H04W 4/50, H04W 4/20, H04M 15/00

(54) **METHODS AND APPARATUSES OF SERVICE FUNCTION CHAIN BASED ON PCC ARCHITECTURE**
VERFAHREN UND VORRICHTUNGEN FÜR DIENSTFUNKTIONSKETTE AUF DER BASIS VON PCC-ARCHITEKTUR
PROCÉDÉS ET DISPOSITIFS POUR CHAÎNE DE FONCTIONS SERVICE BASÉE SUR UNE ARCHITECTURE PCC

(30) Priority: 25.07.2014 CN 201410360826
(43) Date of publication of application: 31.05.2017
(73) Proprietor: Alcatel Lucent, 91620 Nozay (FR)
(72) Inventor: LI, Xiangyang, Pudong Jinqiao 201206 (CN); THIEBAUT, Laurent, F-91620 Nozay (FR)
(74) Representative: DREISS Patentanwälte PartG mbB
(86) International application number: PCT/IB2015/001532
(87) International publication number: WO 2016/012856

(56) References cited:
- US-A1- 2013 054 428
- HAEFFNER VODAFONE J NAPPER CISCO SYSTEMS M STIEMERLING D LOPEZ TELEFONICA I+D J UTTARO AT&T W: "Service Function Chaining Use Cases in Mobile Networks; draft-ietf-sfc-use-case-mobility-01.txt", SERVICE FUNCTION CHAINING USE CASES IN MOBILE NETWORKS; DRAFT-IETF-SFC-USE-CASE-MOBILITY-01.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 4 July 2014 (2014-07-04), pages 1-23, XP015100338, [retrieved on 2014-07-04]
- CHINA MOBILE ET AL: "Discussion on Flexible Mobile Service Orchestration", 3GPP DRAFT; S1-135081 DISCUSSION ON FLEXIBLE MOBILE SERVICE ORCHESTRATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, [Online] vol. SA WG1, no. San Francisco, USA; 20131111 - 20131115, 12 November 2013 (2013-11-12), XP050743090, Retrieved from the Internet: URL:http://www.3gpp.org/ftp/Meetings_3GPP_ SYNC/SA/SA1/Docs/> [retrieved on 2013-11-12]

## Description

### FIELD OF THE PRESENT INVENTION

The present invention relates to a mobile service, and particularly to control method and apparatus of a service function chain based on Policy and Charging Control (PCC) architecture.

### BACKGROUND OF THE PRESENT INVENTION

According to 3GPP EPC specifications (e.g., 3GPP TS 23.401, 23.402), user traffic exchanged by a 3GPP UE over a mobile access network is encapsulated in specific tunnels and is terminated at the Packet Data Network Gateway (PGW) , which transmits the user traffic to the Packet Data Network (PDN) via the Gi or SGi interface. But in the real deployments, user traffic is not directly exchanged between PGW and PDN. In most cases, the user traffic passes a set of service functions or valued added services via the so-called "SGi-LAN" between PGW and the PDN. The same kind of deployment applies to user traffic of wired line, the user traffic of wired line is forced to pass a set of service functions or valued added services between Broadband Network Gateway (BNG) and the PDN.

Both the explosion of mobile traffic and the new valued added services deployed at SGi-LAN to optimize traffic and to improve user experience, cause an increase to the number (and to the cost) of functions required in the SGi-LAN. Currently, the deployment model with network service functions are always statically inserted on the data path between PGW and PDN or on the data path between BNG and PDN. If there is a different model which enables that service functions are not required to reside on the default data path and traffic is instead steered through services, it will be very beneficial.

In some cases, a service function needs to be always in the data path but should only be active when some specific conditions are met. For example, video optimizers are inserted in the path of the TCP traffic between the terminal and the content delivery server but become "active" (enforce video optimization) only when the terminal is served by a low throughput radio access (2G or 3G) or by a congested radio access. In this case, the service function needs to be informed when it should be active.

Furthermore, current specifications do not allow charging entities to be made aware about which elements of the SGi service chain have handled the user traffic.

Currently, operators deliver value added services using a static service chain that is determined based on the Access Point Network (APN) for mobile (wireless) networks and based on the subscriber category for wired (fixed) line networks. The list of services applying to the user traffic is "hard-wired" at the level of global forwarding rules enforced at network layer (e.g. Layer 2 or layer 3 forwarding rules based on the APN), which means there is no flexibility of e.g. adding, removing service nodes, or of (re) programming service chains per service data flow. This requires a "handcrafted" operation to manage and maintain the SGi (service) network with a high complexity and cost and delay in service deployment.

In general, it is required to decide which services functions have to handle an IP flow based on varying and flexible conditions, those conditions include at least one of the following items: time of the day, the individual subscription (static insertion of SGi service platforms is controlled by the APN), congestion status of the network, and the application carried by an IP flow.

With Software Defined Radio (SDN) and Network Function Virtualization (NFV) evolution, the development cycle of mobile product is speeding up and the flexibility of the mobile product is improved, operators are expecting that service chaining environments are allowed to be created or modified in a very flexible and simple manner. Thus, the traditional static service delivery mode cannot meet the requirements form operator anymore.

On the other hand, it is necessary to provide input information to service policy of some service functions (SFs). For example, input information on whether the service functions should remain passive or become active, and when to provide active information for the service functions to determine the degree of service enforcement (e.g. the degree of video compression that a service function should apply). Providing such information should not require a deployment of a dedicated control plane interface (e.g., 3GPP Sd interface between PCRF and an Application Detection Function (ADF) / Traffic Detection Function (TDF)) because deploying such interfaces has an operational cost and raises network scaling issues. US 2013/054428 A1 discloses charging diversification using a modified online charging indicator.

### SUMMARY OF THE PRESENT INVENTION

The invention is defined by the appended independent claims. The basic concept lies in that Policy and Charging Rules Function (PCRF) determines policy rules of service function based on the varying and flexible conditions, and transmits the policy rules to PGW/FDT, online charging system (OCS) and offline charging system (OFCS). Based on the policy rules, PGW/TDF adds and/or deletes a header, OCS and OFCS performs corresponding charging functions. In the present invention, the policy rule information is included in the OCS and OFCS (from PCEF in PGW/BNG or from TDF) interfaces, thus, the charging system is able to adopt different tariffs based on the actual used service function chain. This also provides the capability of defining more flexible tariffs and business charging models for operators.

According to one embodiment of the present application, further comprising after the step C: D. receiving a downlink IP packet of the IP flow in which all service functions have been performed, and deleting policy rule information in the downlink IP packet.

According to one embodiment of the present application, further comprising after the step B: an online charging procedure or an offline charging procedure.

According to one embodiment of the present application, further comprising prior to the step D: an online charging procedure or an offline charging procedure.

According to one embodiment of the present application, the online charging procedure comprises the steps of: E. transmitting, to an online charging system, an online charging request of the service function chain information, the online charging request including the service function chain information; and F. receiving, from an online charging system, an online charging reply; the offline charging procedure comprising the steps of: H. transmitting, to an offline charging system, an offline charging request of the service function chain information, the offline charging request including the service function chain information; and I. receiving, from an offline charging system, an offline charging reply.

According to one embodiment of the present application, the policy rule information further comprises a policy input of a service function, the policy input of a service function provides input information for a service function in the service function chain.

According to one embodiment of the present application, the first network device is PDN gateway or traffic detection function or broadband network gateway control device.

According to one embodiment of the present application, further comprising: receiving, from the PDN, a downlink IP packet of the IP flow; retrieving the policy rule information and adding a policy rule information header in the downlink IP packet from the PDN; transmitting, based on the policy rule information, the downlink IP packet in which the policy rule information header has been added, the service function execution unit being configured for performing all service functions in the policy rule information for the downlink IP packet and transmitting the downlink IP packet in which all service functions have been performed, to a first network device.

According to one embodiment of the present application, the second network device is a service function edge chain function unit and the second network device is integrated in a first network device or is an independent entity.

According to one embodiment of the present application, wherein the step i further comprises: determining, based on at least one of conditions, a policy rule, wherein the conditions includes time period, application flow information, application sponsorship information, network information, subscriber information, subscriber charging information and operator policy.

The solution of the present application enables operator to optimize service delivery, offers value-added service based on network, optimize network behavior (protect network against attacks and ensure privacy). The policy-based technical solution of service chain function in the present application enhances the existing 3GPP LTE/EPS architecture, enhances the policy control in supporting dynamic service function chain enables the operator to generate more revenue from IP traffic flow, and provides better service over the traditional IP service. Therefore, it is very important to a mobile operator.

Various aspects of the present application will become more apparent through the description of embodiments hereinafter.

### BRIEF DESCRIPTION OF THE DRAWINGS

The other features and advantages of the present invention will be better understood via the preferable embodiments described in detail hereinafter with reference to the accompanying drawings.
Fig.1 illustrates a schematic view of the policy-based service function chain;
Fig.2 illustrates a flow chart of uplink call according to an embodiment of the invention;
Fig.3 illustrates a flow chart of downlink call corresponding to Fig.2;
Fig.4 illustrates a flow chart of uplink call according to another embodiment of the invention;
Fig.5 illustrates a flow chart of downlink call corresponding to Fig.4;
Fig.6 illustrates a schematic view of a first control apparatus of the service function chain based on PCC architecture;
Fig.7 illustrates a schematic view of a second control apparatus of the service function chain based on PCC architecture; and
Fig.8 illustrates a schematic view of a third control apparatus of the service function chain based on PCC architecture.

In the figures, the same or similar reference number indicates the same or similar component or feature.

### DETAILED DESCRIPTION OF THE PREFERRED EMBODIMENTS

In detailed description of the preferred embodiment hereafter, appended figures, as part of the present application, will be referred. The appended drawings illustrate the specific embodiments to carry out the present application through exemplary manner. Exemplary embodiments are not intended to exhaust all embodiments of the present application. It needs to clarify that, although steps associated with corresponding method in the present application is described in a specific order in accompanying drawings, it does not requires or suggests that those operations must be performed accordance with the specific order, or all the illustrated operations must be performed in order to achieve the desired results, in contrast, the order described in the present application can be changed. Additionally or alternatively, some steps may be omitted, multiple steps may be combined into one step, and/or one step may be decomposed into several steps.

For better describing the technical solution of the present application, some terms of the present application are defined.

PGW: PGW terminates the SGi interface to external data networks (e.g. Internet, IMS etc.), is responsible for managing data routine between 3GPP and non-3GPP and for managing mobility between 3GPP access and non-3GPP access (e.g., WLAN, WiMAX etc.), and is also responsible for functions like DHCP, policy enforcement and charging.

PCRF: PCRF is a policy decision node for the policy of traffic data flow and IP bearing resource and charging control policy, it selects and provides the available policy and charging control policy decision for Policy and Charging Execution Function (PCEF) unit.

PCEF: It mainly includes the detection, policy enforcement and flow-based charging function of traffic data flow. This function entity is located in the gateway, e.g., GGSN Gateway of GPRS, P-GW of EPC, PDG of WLAN, or is independently deployed.

Service Function Chain: It defines required corresponding service functions and an order for performing the service functions (SF1->SF2).

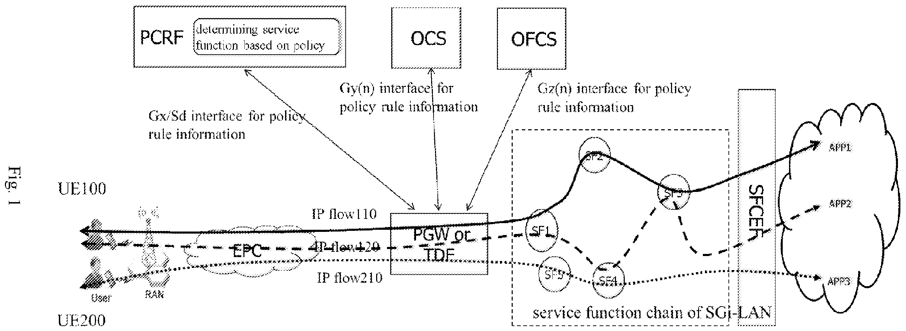

Fig.1 illustrates a schematic view of the policy-based service function chain. As shown in Fig.1, PGW or TDF provides policy rule to PCRF, OCS and OFCS via Gx/Sd, Gy(n) and Gz(n) interface, respectively.

PCEF enhanced ADC or TDF sends an online charging request including policy rule information to OCS via Gy or Gyn, so the online charging system can apply different tariffs to the application service data flow, based on the different service functions that have handled the user traffic.

Similarly, for offline charging, the PCEF enhanced with ADC or TDF sends the offline charging request including policy rule information to OFCS to generate the CDR via Gz or Gzn, so the OFCS can use the service chain function for postpaid billing, revenue assurance, reporting and analysis etc.

UE 100 initiates two service data flows: IP Flow 110 and IP Flow 120 for APP1 and APP 2 respectively, UE200 initiates one service data flow IP210 for APP 2. PCRF based on the policy rule derives the following service chains.

For UE 100:

The service chain for IP Flow 110: SF1 -> SF2 -> SF3

The service chain for IP Flow 120: SF1 -> SF4 -> SF3

For UE 200:

The service chain for IP Flow 210: SF5 -> SF4.

PCRF determines policy rule based on varying and flexible conditions. The policy rule includes service chain information that includes an ordered set of all service chain of the IP flow. Alternatively, besides the service function chain information, the policy rules may further include policy input of the service chain function that provides input to service functions in the service function chain. Specifically, service function chain information may define service function ID and service function list. The service function list further defines the execution order and the priority of the service functions, and may be made up of service function ID and service function locator. The service function locator is the IP address for the specific service function ID.

If PCRF does not provide policy rule information, Service Function Chain Edge Function (SFCEF) may determine service function chain based on the default policy rule information of local configuration in PGW/TDF.

PCRF determines the service chain and policy input of the service functions based on the following conditions and information, these conditions and information may include:
- Time of the day;
- Application flow information (layer 3 to layer 7) and application sponsorship information;
- Network information: Subscriber radio access and location information, Quality of Service (QoS), network congestion status etc.
- Subscriber repository context: subscriber allowed valued added service, service priority, subscriber allowed QoS, subscriber category (enterprise, personal-adult/young etc.), age, birthday etc. The subscriber subscription context information can be obtained from subscriber profile repository (SPR) via Sp reference point interface. For example, the teenage users require the parental control valued added service function, and the enterprise users require the enterprise security service function;
- Subscriber charging information: e.g. policy based spending counter status, which can be received via the Sy interface with for example, OCS;
- Operator policies.

The skilled in the art should appreciate that though policy input of the service functions is listed above, but not limited to those, any other appropriate policy input of the service function chain based on various applications may be adopted in the present application.

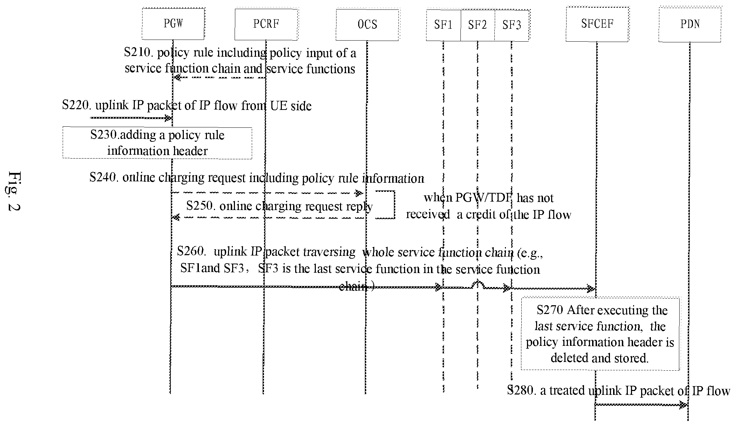

Fig.2 illustrates a flow chart of uplink call according to an embodiment of the invention. The embodiment of the present application takes PGW as an example to illustrate the technical solution of the present application. The skilled person in the art should appreciate that TDF or BNG or any other appropriate network devices may perform the technical solution of the present application by replacing PGW.

In Step S210 of Fig.2, PCRF transmits the policy rule information to PGW via Gx/Sd interface, the policy rule information at least include service function chain information that includes an ordered set of all service functions in the IP flow.

Preferably, the policy rule information may further include policy input of the service functions, and the policy input of the service functions is transmitted to service function in the service function chain.

In Step S220, PGW receives an uplink IP packet of the IP flow from user side.

In Step S230, PGW adds the policy rule information header in the uplink IP packet of the IP flow.

PGW has never received a credit of the service function chain, in Step S240, PGW transmits to OCS an online charging request of the service function chain, the online charging request includes the service function information, and the credit refers to a quota assigned by OCS.

In Step S250, OCS transmits an online charging reply to PGW.

Similarly, for OFCS, PGW transmits to OFCS (not shown in Fig.2) an offline charging request of the service function chain, the offline charging request includes service function chain information, and then OFCS transmits to PGW corresponding offline charging reply.

In Step S260, PGW transmits to service function execution unit (i.e., SF1 and SF 3 in Fig.2) an uplink IP packet in which policy rule information has been added. Service function execution unit performs service functions in the policy rule information for the uplink IP packet in which the policy rule information has been added, and transmits to SFCEF the uplink IP packet in which all the service functions have been executed. In the embodiment as shown in Fig.2, SFCEF is an independent entity.

As illustrated in Fig.2, for example, the service function chain information includes an ordered set of SF1->SF3, SF1 is executed for uplink IP packet firstly, then SF3 is executed for the uplink IP packet, SF3 is the last service function in the service function chain.

In Step S270, SFCEF receives an uplink IP packet of the IP flow from the service function execution unit, deletes the policy rule information in the uplink IP packet, and stores the policy rule information (for further processing of an downlink IP packet of the same IP flow).

In Step S280, SFCEF transmits to PDN the uplink IP packet of the IP flow, in which the policy rule information has been deleted.

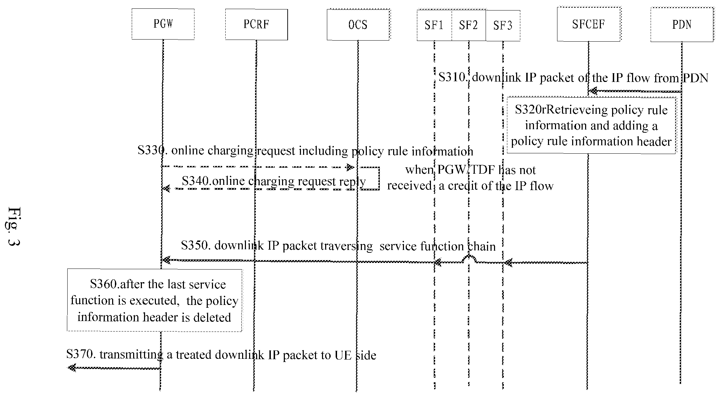

Fig.3 illustrates a flow chart of downlink call corresponding to Fig.2.

In Step S310, the SFCEF receives a downlink IP packet of the corresponding IP flow in Fig.2.

In Step S320, SFCEF determines the corresponding IP flow of the downlink IP packet, and retrieves the policy rule information stored in Step S270, and adds the policy rule information in the downlink IP packet from PDN.

Similarly, in Step S330 and Step S340, PGW needs to initiate corresponding online or offline charging request to OCS or OFCS (not shown in Fig.3), respectively, which are not repeated here.

In Step S350, based on the policy rule information, SFCEF transmits to service function execution unit the downlink IP packet in which the policy rule information has been added. The service function execution unit executes the service functions in the policy rules information for the downlink IP packet, and transmits to PGW the downlink IP packet in which all service functions have been executed.

In Step S360, PGW receives the downlink IP packet of the IP flow, in which all service functions have been executed, and deletes policy rule information in the downlink IP packet.

For example, after SF1 and SF3 in service function chain have been executed for the downlink IP packet, PGW deletes the policy rule information in the downlink IP packet.

In Step S370, PGW transmits to the UE the downlink IP packet of the IP flow.

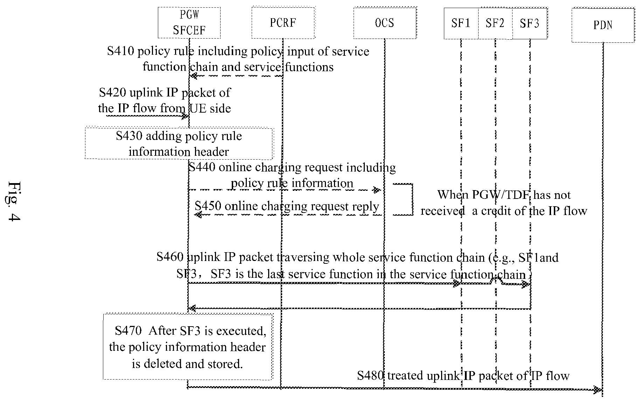

Fig.4 illustrates a flow chart of uplink call according to another embodiment of the invention, in the embodiment illustrated in Fig. 4, SFCEF unit is integrated in PGW, especially, SFCEF may be integrated in Policy and Charging Enforcement Function (PCEF) in PGW. As the steps in Fig.4 are similar to Steps S210-S250 in Fig. 2, which are not repeated here.

In Step S460, based on the policy rule information, transmits to service function execution unit (i.e., SF1 and SF3 in Fig.4) an uplink IP packet in which the policy rule information has been added. Service function execution unit executes the service functions in the policy rule information for the uplink IP packet in which the policy rule information has been added, and transmits to the SFCEF integrated in the PGW the uplink IP packet in which all service functions have been executed, in the embodiment shown in Fig.4, SFCEF unit is integrated in PGW.

In Step S470, SFCEF integrated in PGW receives the uplink IP packet of the IP flow from service function execution unit, deletes the policy rule information in the uplink IP packet, and stores the policy rule information (for further processing of an downlink IP packet of the same IP flow).

In Step S480, SFCEF integrated in PGW transmits to PDN an uplink IP packet of the IP flow in which the policy rule information has been deleted.

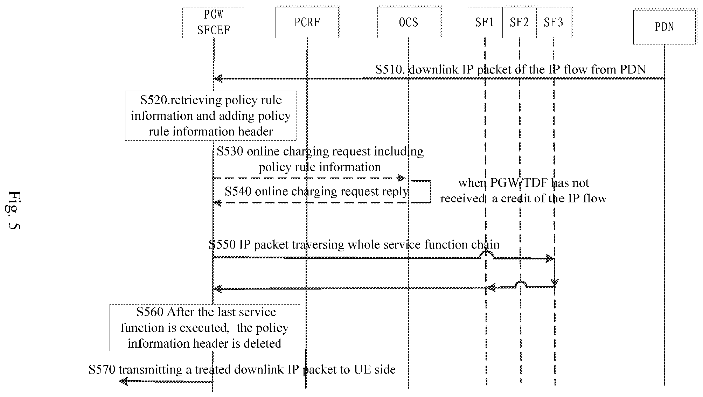

Fig.5 illustrates a flow chart of downlink call corresponding to Fig.4, in the embodiment shown in Fig.5, SFCEF is integrated in PGW. Specially, SFCEF may be integrated in PCEF in PGW.

In Step S510, SFCEF integrated in PGW receives, from PDN, the downlink IP packet of the IP flow corresponding to Step S480.

In Step S520, SFCEF integrated in PGW retrieves the policy rule information and adds the policy rule information header in the downlink IP packet form PDN.

Step S530 and Step S540 about online or offline charging have been described in aforementioned description, which are not repeated here.

In Step S550, based on the policy rule information, SFCEF integrated in PGW transmits to service function execution unit the downlink IP packet in which the policy rule information has been added, the service function execution unit is used for executing service functions in the policy rule information for downlink IP packet, and transmits to PGW the downlink IP packet in which the service functions have been executed.

Step S560 and Step S570 are similar to Step S360 and Step S370 in Fig.3, respectively, which are not repeated here.

The technical solution of the present application enables PCRF to install, update and delete service information chain information and policy input of service functions at any time, so as to add/modify/delete PCC/ADC rules via Gx/Sd interface. In this way, service function chain may be updated dynamically based on the requirements from operators and UEs.

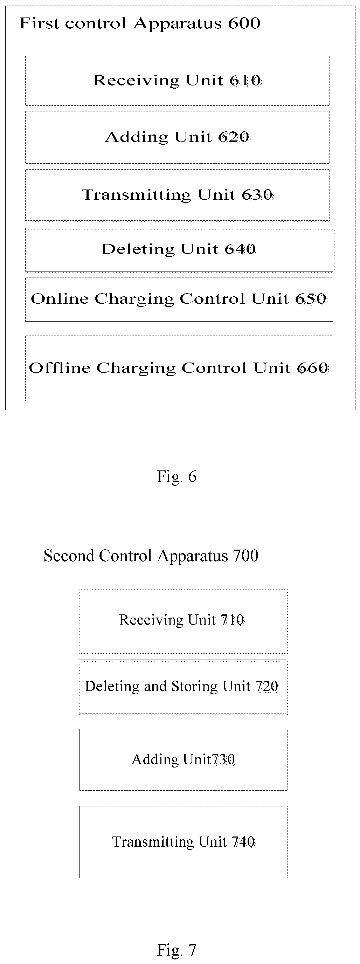

Fig.6 illustrates a schematic view of a first control apparatus 600 of the service function chain based on PCC architecture. The first control apparatus 600 may be or may implement PWG or TDF or BNG in the embodiment described in the aforementioned description in conjunction with Figs 2-5.

As illustrated in Fig.6, the first control apparatus comprises a receiving unit 610 for receiving policy rule information of an IP flow from a third network device, the policy rule information includes service function chain information; an adding unit 620 for receiving an uplink packet of the IP flow from a UE, and adding policy rule policy information header in the uplink packet of the IP flow; and a transmitting unit 630 for transmitting, based on the policy rule information, to a service function execution unit, the uplink packet which has been added an policy rule information header; the service function execution unit performs all service functions in the policy rule information for the uplink packet which has been added an policy rule information header, and transmits the uplink packet being performed all service functions to a second network device; a deleting unit 640 for receiving a downlink IP packet of the IP flow which has been performed all service functions, and deleting policy rule information in the downlink IP packet.

The first control apparatus further comprises an online charging unit 650 for transmitting, to an online charging system, an online charging request of the service function chain and receiving an online reply from an online charging system, the online charging request includes the service function chain information; an offline charging unit 660 for transmitting, to an offline charging system, an offline charging request of the service function chain and receiving, from an offline charging system, an offline charging reply, the offline charging request comprises the service function chain information.

Fig.7 illustrates a schematic view of a second control apparatus of the service function chain based on PCC architecture. The second control apparatus 700 may be or may implement SFCEF in the embodiment described in the aforementioned description in conjunction with Figs 2-5, which may be an independent entity or may be integrated in PGW.

As illustrated in Fig.7, the second control apparatus comprises a receiving unit 710 for receiving, from a service function execution unit, an uplink IP packet of an IP flow and receiving, from a PDN, a downlink IP packet of the IP flow; a deleting and storing unit 720 for deleting policy rule information in the uplink IP packet, and storing the policy rule information, wherein the policy rule information includes service function chain information; and an adding unit 730 for retrieving the policy rule information and adding the policy rule information header in the downlink IP packet from the PDN; a transmitting unit 740 for transmitting, to the PDN, the uplink IP packet in which the policy rule information is deleted and transmitting, based on the policy rule information, the downlink IP packet which has been added the policy rule information header to a service function execution unit; wherein the service function execution unit performs all service functions in the policy rule information and transmits the downlink IP packet in which the service function have been performed, to a first network device.

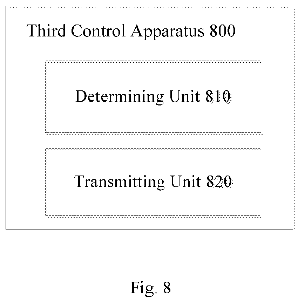

Fig.8 illustrates a schematic view of a third control apparatus of the service function chain based on PCC architecture. The third control apparatus 800 may be or may implement PCRF in the embodiment described in the aforementioned description in conjunction with Figs 2-5, which may be an independent entity or may be integrated in PGW.

As illustrated in Fig.8, the third control apparatus comprises a determination unit 810 for determining a policy rule of an IP flow; a transmitting unit 820 for transmitting, to a first network device, policy rule information of the policy rule, the policy rule information includes at least service function chain information.

It should be noted that the above described embodiments are given for describing rather than limiting the invention, and it is to be understood that modifications and variations may be resorted to without departing from the scope of the invention as those skilled in the art readily understand. Such modifications and variations are considered to be within the scope of the invention and the appended claims. The protection scope of the invention is defined by the accompanying claims. In addition, any of the reference numerals in the claims should not be interpreted as a limitation to the claims. Use of the verb "comprise" and its conjugations does not exclude the presence of elements or steps other than those stated in a claim.

## Claims

1. A control method of a service function chain based on Policy and Charging Control, PCC, architecture comprising a first network device, a second network device, a third network device and a service function execution unit, the method comprising the steps, performed by the first network device (PGW), of: (A). receiving (S210.), from the third network device (PCRF), policy rule information of an IP flow, the policy rule information including service function chain information; (B). receiving (S220.), from a UE, an uplink packet of the IP flow, and adding (S230.) a policy rule information header in the uplink packet of the IP flow; and (C). transmitting, based on the policy rule information, to the service function execution unit, the uplink IP packet in which the policy rule information header has been added; the service function execution unit being configured for performing all service functions in the policy rule information for the uplink IP packet in which the policy rule information header has been added, and transmitting, to the second network device, the uplink IP packet in which all service functions have been performed, wherein the service function chain information comprises an ordered set of all service functions of the IP flow.

2. The control method according to claim 1, further comprising after the step (C): (D). receiving a downlink IP packet of the IP flow in which all service functions have been performed, and deleting policy rule information in the downlink IP packet.

3. The control method according to claim 1, further comprising after the step (B): an online charging procedure or an offline charging procedure.

4. The control method according to claim 2, further comprising prior to the step (D): an online charging procedure or an offline charging procedure.

5. The control method according to any of claim 3 or 4, wherein the online charging procedure comprises the steps of: (E). transmitting (S240.), to an online charging system (OCS), an online charging request of the service function chain information, the online charging request including the service function chain information; and (F). receiving (S250.), from an online charging system (OCS), an online charging reply; the offline charging procedure comprising the steps of: (H). transmitting, to an offline charging system, an offline charging request of the service function chain information, the offline charging request including the service function chain information; and (I). receiving, from an offline charging system, an offline charging reply.

6. The control method according to claim 1, wherein the policy rule information further comprises a policy input of a service function, the policy input of a service function provides input information for a service function in the service function chain.

7. The control method according to any of claims 1 to 6, wherein the first network device is PDN gateway or traffic detection function or broadband network gateway control device.

8. A control method of a service function chain based on Policy and Charging Control, PCC, architecture comprising a first network device, a second network device, a third network device and a service function execution unit, the method comprising the steps, performed by the second network device, of: receiving, from the service function execution unit, an uplink IP packet of an IP flow; deleting policy rule information in the uplink IP packet and storing the policy rule information, the policy rule information including service function chain information; and transmitting, to a PDN, the uplink IP packet in which the policy rule information has been deleted, wherein the service function chain information comprises an ordered set of all service functions of the IP flow.

9. The control method according to claim 8, further comprising: receiving, from the PDN, a downlink IP packet of the IP flow; retrieving the policy rule information and adding a policy rule information header in the downlink IP packet from the PDN; transmitting, based on the policy rule information, the downlink IP packet in which the policy rule information header has been added, the service function execution unit being configured for performs all service functions in the policy rule information for the downlink IP packet and transmitting the downlink IP packet in which all service functions have been performed, to the first network device.

10. The control method according to any of claims 8 to 9, wherein the second network device is a service function chain edge function unit and the second network device is integrated in a first network device or is an independent entity.

11. A control method of a service function chain based on Policy and Charging Control, PCC, architecture comprising a first network device, a second network device, a third network device and a service function execution unit, the method comprising the steps, performed by the third network device, of: (i). determining a policy rule of an IP flow; (ii). transmitting, to the first network device, policy rule information of the policy rule, the policy rule information including service function chain information, wherein the service function chain information comprises an ordered set of all service functions of the IP flow.

12. The control method according to claim 11, wherein the step (i) further comprises: determining, based on at least one of conditions, a policy rule, wherein the conditions include time period, application flow information, application sponsorship information, network information, subscriber information, subscriber charging information and operator policy.

13. A first control apparatus (600) of a service function chain based on the Policy and Charging Control, PCC, architecture comprising a first network device, a second network device, a third network device and a service function execution unit, the first control apparatus (600) comprising: a receiving unit (610) for receiving policy rule information of an IP flow from the third network device, the policy rule information including service function chain information; an adding unit (620) for receiving an uplink packet of the IP flow from a UE and adding a policy rule information header in the uplink packet of the IP flow; and a transmitting unit (630) for transmitting, based on the policy rule information, to the service function execution unit, the uplink IP packet in which the policy rule information header has been added; the service function execution unit being configured for performing all service functions in the policy rule information for the uplink IP packet in which the policy rule information header has been added, and transmitting the uplink IP packet in which all service functions have been performed to a service function chain edge function unit; a deleting unit (640) for receiving a downlink IP packet of the IP flow in which all service functions have been performed, and deleting policy rule information in the downlink IP packet, wherein the service function chain information comprises an ordered set of all service functions of the IP flow.

14. A second control apparatus (700) of a service function chain based on the Policy and Charging Control, PCC, architecture comprising a first network device, a second network device, a third network device and a service function execution unit, the second control apparatus (700) comprising: a receiving unit (710) for receiving, from the service function execution unit, an uplink IP packet of an IP flow and receiving, from PDN, a downlink IP packet of the IP flow; a deleting and storing unit (720) for deleting policy rule information in the uplink IP packet, and storing the policy rule information, wherein the policy rule information includes service function chain information; and an adding unit (730) for retrieving the policy rule information and adding the policy rule information header in the downlink IP packet from the PDN; a transmitting unit (740) for transmitting, to the PDN, the uplink IP packet in which the policy rule information has been deleted and transmitting, based on the policy rule information, the downlink IP packet in which the policy rule information header has been added to the service function execution unit; wherein the service function execution unit performs all service functions in the policy rule information and transmits the downlink IP packet in which all service functions have been performed, to the first network device, wherein the service function chain information comprises an ordered set of all service functions of the IP flow.

## Patentansprüche

1. Steuerverfahren einer Dienstfunktionskette auf Basis einer Richtlinien- und Abrechnungssteuerungs(PCC)-Architektur, die eine erste Netzwerkvorrichtung, eine zweite Netzwerkvorrichtung, eine dritte Netzwerkvorrichtung und eine Dienstfunktionsausführungseinheit umfasst, wobei das Verfahren die folgenden Schritte umfasst, die von der ersten Netzwerkvorrichtung (PGW) durchgeführt werden: (A). Empfangen (S210.) von Richtlinienregelinformationen eines IP-Flusses von der dritten Netzwerkvorrichtung (PCRF), wobei die Richtlinienregelinformationen Dienstfunktionsketteninformationen beinhalten; (B). Empfangen (S220.) eines Uplinkpakets des IP-Flusses von einer UE, und Hinzufügen (S230.) eines Richtlinienregelinformationsheaders zum Uplinkpaket des IP-Flusses und (C). Übertragen des Uplink-IP-Pakets, zu dem der Richtlinienregelinformationsheader hinzugefügt wurde, auf Basis der Richtlinienregelinformationen zur Dienstfunktionsausführungseinheit; wobei die Dienstfunktionsausführungseinheit zum Durchführen aller Dienstfunktionen in den Richtlinienregelinformationen für das Uplink-IP-Paket, zu denen der Richtlinienregelinformationsheader hinzugefügt wurde, und Übertragen des Uplink-IP-Pakets, in dem alle Dienstfunktionen durchgeführt wurden, zur zweiten Netzwerkvorrichtung ausgelegt ist, wobei die Dienstfunktionsketteninformationen einen geordneten Satz von allen Dienstfunktionen des IP-Flusses umfassen.

2. Steuerverfahren nach Anspruch 1, das nach Schritt (C) Folgendes umfasst: (D). Empfangen eines Downlink-IP-Pakets des IP-Flusses, in dem alle Dienstfunktionen durchgeführt wurden, und Löschen der Richtlinienregelinformationen im Downlink-IP-Paket.

3. Steuerverfahren nach Anspruch 1, das nach dem Schritt (B) ferner Folgendes umfasst: eine Onlineabrechnungsprozedur oder eine Offlineabrechnungsprozedur.

4. Steuerverfahren nach Anspruch 2, das vor dem Schritt (D) ferner Folgendes umfasst: eine Onlineabrechnungsprozedur oder eine Offlineabrechnungsprozedur.

5. Steuerverfahren nach einem der Ansprüche 3 oder 4, wobei die Onlineabrechnungsprozedur die folgenden Schritte umfasst: (E). Übertragen (S240.) einer Onlineabrechnungsanforderung der Dienstfunktionsketteninformationen zu einem Onlineabrechnungssystem (OCS), wobei die Onlineabrechnungsanforderung die Dienstfunktionsketteninformationen beinhaltet; und (F). Empfangen (S250.) einer Onlineabrechnungsantwort von einem Onlineabrechnungssystem (OCS); wobei die Offlineabrechnungsprozedur die folgenden Schritte umfasst: (H). Übertragen einer Offlineabrechnungsanforderung der Dienstfunktionsketteninformationen zu einem Offlineabrechnungssystem, wobei die Offlineabrechnungsanforderung die Dienstfunktionsketteninformationen beinhaltet; und (I). Empfangen einer Offlineabrechnungsantwort von einem Offlineabrechnungssystem.

6. Steuerverfahren nach Anspruch 1, wobei die Richtlinienregelinformationen ferner einen Richtlinieneingang einer Dienstfunktion umfasst, der Richtlinieneingang einer Dienstfunktion Eingangsinformationen für eine Dienstfunktion in der Dienstfunktionskette bereitstellt.

7. Steuerverfahren nach einem der Ansprüche 1 bis 6, wobei die erste Netzwerkvorrichtung ein PDN-Gateway oder eine Verkehrsdetektionsfunktion oder eine Breitbandnetzwerkgatewaysteuervorrichtung ist.

8. Steuerverfahren einer Dienstfunktionskette auf Basis einer Richtlinien- und Abrechnungssteuerungs(PCC)-Architektur, die eine erste Netzwerkvorrichtung, eine zweite Netzwerkvorrichtung, eine dritte Netzwerkvorrichtung und eine Dienstfunktionsausführungseinheit umfasst, wobei das Verfahren die folgenden Schritte umfasst, die von der zweiten Netzwerkvorrichtung durchgeführt werden:
Empfangen eines Uplink-IP-Pakets eines IP-Flusses von der Dienstfunktionsausführungseinheit;
Löschen von Richtlinienregelinformationen im Uplink-IP-Paket und Speichern der Richtlinienregelinformationen, wobei die Richtlinienregelinformationen Dienstfunktionsketteninformationen beinhalten; und
Übertragen des Uplink-IP-Pakets, in dem die Richtlinienregelinformationen gelöscht worden, zu einem PDN, wobei die Dienstfunktionsketteninformationen einen geordneten Satz von allen Dienstfunktionen des IP-Flusses umfassen.

9. Steuerverfahren nach Anspruch 8, das ferner Folgendes umfasst: Empfangen eines Downlink-IP-Pakets des IP-Flusses vom PDN; Abrufen der Richtlinienregelinformationen und Hinzufügen eines Richtlinienregelinformationsheaders zum Downlink-IP-Paket vom PDN; Übertragen des Downlink-IP-Pakets, zu dem der Richtlinienregelinformationsheader hinzugefügt wurde, auf Basis der Richtlinienregelinformationen, wobei die Dienstfunktionsausführungseinheit zum Durchführen von allen Dienstfunktionen in den Richtlinienregelinformationen für das Downlink-IP-Paket und Übertragen des Downlink-IP-Pakets, in dem alle Dienstfunktionen durchgeführt wurden, zur ersten Netzwerkvorrichtung ausgelegt ist.

10. Steuerverfahren nach einem der Ansprüche 8 bis 9, wobei die zweite Netzwerkvorrichtung eine Dienstfunktionskettenrandfunktionseinheit ist und die zweite Netzwerkvorrichtung in eine erste Netzwerkvorrichtung integriert ist oder eine unabhängige Entität ist.

11. Steuerverfahren einer Dienstfunktionskette auf Basis einer Richtlinien- und Abrechnungssteuerungs(PCC)-Architektur, die eine erste Netzwerkvorrichtung, eine zweite Netzwerkvorrichtung, eine dritte Netzwerkvorrichtung und eine Dienstfunktionsausführungseinheit umfasst, wobei das Verfahren die folgenden Schritte umfasst, die von der dritten Netzwerkvorrichtung durchgeführt werden:
(i). Bestimmen einer Richtlinienregel eines IP-Flusses; (ii). Übertragen von Richtlinienregelinformationen der Richtlinienregel zur ersten Netzwerkvorrichtung, wobei die Richtlinienregelinformationen Dienstfunktionsketteninformationen beinhalten, wobei die Dienstfunktionsketteninformationen einen geordneten Satz von allen Dienstfunktionen des IP-Flusses umfassen.

12. Steuerverfahren nach Anspruch 11, wobei der Schritt (i) ferner Folgendes umfasst: Bestimmen einer Richtlinienregel auf Basis von mindestens einer von Bedingungen, wobei die Bedingungen eine Zeitperiode, Anwendungsflussinformationen, Anwendungssponsoringinformationen, Netzwerkinformationen, Teilnehmerinformationen, Teilnehmergebühreninformationen und eine Betreiberrichtlinie beinhalten.

13. Erste Steuereinrichtung (600) einer Dienstfunktionskette auf Basis der Richtlinien- und Abrechnungssteuerungs(PCC)-Architektur, die eine erste Netzwerkvorrichtung, eine zweite Netzwerkvorrichtung, eine dritte Netzwerkvorrichtung und eine Dienstfunktionsausführungseinheit umfasst, wobei die erste Steuereinrichtung (600) Folgendes umfasst: eine Empfangseinheit (610) zum Empfangen von Richtlinienregelinformationen eines IP-Flusses von der dritten Netzwerkvorrichtung, wobei die Richtlinienregelinformationen Dienstfunktionsketteninformationen beinhalten; eine Hinzufügungseinheit (620) zum Empfangen eines Uplinkpakets des IP-Flusses von einer UE und Hinzufügen eines Richtlinienregelinformationsheaders zum Uplinkpaket des IP-Flusses und eine Übertragungseinheit (630) zum Übertragen des Uplink-IP-Pakets, zu dem der Richtlinienregelinformationsheader hinzugefügt wurde, auf Basis der Richtlinienregelinformationen zur Dienstfunktionsausführungseinheit; wobei die Dienstfunktionsausführungseinheit zum Durchführen von allen Dienstfunktionen in den Richtlinienregelinformationen für das Uplink-IP-Paket, zu dem der Richtlinienregelinformationsheader hinzugefügt wurde, und Übertragen des Uplink-IP-Pakets, in dem alle Dienstfunktionen durchgeführt wurden, zu einer Dienstfunktionskettenrandfunktionseinheit ausgelegt ist; eine Löscheinheit (640) zum Empfangen eines Downlink-IP-Pakets des IP-Flusses, in dem alle Dienstfunktionen durchgeführt wurden, und Löschen der Richtlinienregelinformationen im Downlink-IP-Paket, wobei die Dienstfunktionsketteninformationen einen geordneten Satz von allen Dienstfunktionen im IP-Fluss umfasst.

14. Zweite Steuereinrichtung (700) einer Dienstfunktionskette auf Basis der Richtlinien- und Abrechnungssteuerungs(PCC)-Architektur, die eine erste Netzwerkvorrichtung, eine zweite Netzwerkvorrichtung, eine dritte Netzwerkvorrichtung und eine Dienstfunktionsausführungseinheit umfasst, wobei die zweite Steuereinrichtung (700) Folgendes umfasst: eine Empfangseinheit (710) zum Abrufen eines Uplink-IP-Pakets eines IP-Flusses von der Dienstfunktionsausführungseinheit und Empfangen eines Downlink-IP-Pakets des IP-Flusses von einem PDN, eine Lösch- und Speichereinheit (720) zum Löschen von Richtlinienregelinformationen im Uplink-IP-Paket und Speichern der Richtlinienregelinformationen, wobei die Richtlinienregelinformationen Dienstfunktionsketteninformationen beinhalten; und eine Hinzufügungseinheit (730) zum Abrufen der Richtlinienregelinformationen und Hinzufügen des Richtlinienregelinformationsheaders zum Downlink-IP-Paket vom PDN; eine Übertragungseinheit (740) zum Übertragen des Uplink-IP-Pakets, in dem die Richtlinienregelinformationen gelöscht wurden, zum PDN und Übertragen des Downlink-IP-Pakets, zu dem der Richtlinienregelinformationsheader hinzugefügt wurde, auf Basis der Richtlinienregelinformationen zur Dienstfunktionsausführungseinheit; wobei die Dienstfunktionsausführungseinheit alle Dienstfunktionen in den Richtlinienregelinformationen durchführt und das Downlink-IP-Paket, in dem alle Dienstfunktionen durchgeführt wurden, zur ersten Netzwerkvorrichtung überträgt, wobei die Dienstfunktionsketteninformationen einen geordneten Satz von allen Dienstfunktionen des IP-Flusses umfassen.

## Revendications

1. Procédé de commande d'une chaîne de fonctions de service basé sur une architecture de commande de politique et de facturation, PCC, comprenant un premier dispositif de réseau, un deuxième dispositif de réseau, un troisième dispositif de réseau et une unité d'exécution de fonctions de service,
le procédé comprenant les étapes, réalisées par le premier dispositif de réseau (PGW), consistant à :
(A). recevoir (S210.), à partir du troisième dispositif de réseau (PCRF), des informations de règle de politique d'un flux IP, les informations de règle de politique comportant des informations de chaîne de fonctions de service ;
(B). recevoir (S220.), à partir d'un UE, un paquet de liaison montante du flux IP, et ajouter (S230.) un en-tête d'informations de règle de politique dans le paquet de liaison montante du flux IP ; et (C). transmettre, sur la base des informations de règle de politique, à l'unité d'exécution de fonctions de service, le paquet IP de liaison montante dans lequel l'en-tête d'informations de règle de politique a été ajouté ; l'unité d'exécution de fonctions de service étant configurée pour réaliser toutes les fonctions de service dans les informations de règle de politique pour le paquet IP de liaison montante dans lequel l'en-tête d'informations de règle de politique a été ajouté, et transmettre, au deuxième dispositif de réseau, le paquet IP de liaison montante dans lequel toutes les fonctions de service ont été réalisées, dans lequel les informations de chaîne de fonctions de service comprennent un ensemble ordonné de toutes les fonctions de service du flux IP.

2. Procédé de commande selon la revendication 1, comprenant en outre après l'étape (C) : (D). la réception d'un paquet IP de liaison descendante du flux IP dans lequel toutes les fonctions de service ont été réalisées, et la suppression d'informations de règle de politique dans le paquet IP de liaison descendante.

3. Procédé de commande selon la revendication 1, comprenant en outre après l'étape (B) : une procédure de facturation en ligne ou une procédure de facturation hors ligne.

4. Procédé de commande selon la revendication 2, comprenant en outre avant l'étape (D) : une procédure de facturation en ligne ou une procédure de facturation hors ligne.

5. Procédé de commande selon l'une quelconque des revendications 3 ou 4, dans lequel la procédure de facturation en ligne comprend les étapes consistant à : (E). transmettre (S240.), à un système de facturation en ligne (OCS), une demande de facturation en ligne des informations de chaîne de fonctions de service, la demande de facturation en ligne comportant les informations de chaîne de fonctions de service ; et (F). recevoir (S250.), à partir d'un système de facturation en ligne (OCS), une réponse de facturation en ligne ; la procédure de facturation hors ligne comprenant les étapes consistant à : (H). transmettre, à un système de facturation hors ligne, une demande de facturation hors ligne des informations de chaîne de fonctions de service, la demande de facturation hors ligne comportant les informations de chaîne de fonctions de service ; et (I). recevoir, à partir d'un système de facturation hors ligne, une réponse de facturation hors ligne.

6. Procédé de commande selon la revendication 1, dans lequel les informations de règle de politique comprennent en outre une entrée de politique d'une fonction de service, l'entrée de politique d'une fonction de service fournissant des informations d'entrée pour une fonction de service dans la chaîne de fonctions de service.

7. Procédé de commande selon l'une quelconque des revendications 1 à 6, dans lequel le premier dispositif de réseau est une passerelle PDN ou une fonction de détection de trafic ou un dispositif de commande de passerelle de réseau à large bande.

8. Procédé de commande d'une chaîne de fonctions de service basé sur une architecture de commande de politique et de facturation, PCC, comprenant un premier dispositif de réseau, un deuxième dispositif de réseau, un troisième dispositif de réseau et une unité d'exécution de fonctions de service,
le procédé comprenant les étapes, réalisées par le deuxième dispositif de réseau, consistant à :
recevoir, à partir de l'unité d'exécution de fonctions de service, un paquet IP de liaison montante d'un flux IP ;
supprimer des informations de règle de politique dans le paquet IP de liaison montante et stocker les informations de règle de politique, les informations de règle de politique comportant des informations de chaîne de fonctions de service ; et
transmettre, à un PDN, le paquet IP de liaison montante dans lequel les informations de règle de politique ont été supprimées, dans lequel les informations de chaîne de fonctions de service comprennent un ensemble ordonné de toutes les fonctions de service du flux IP.

9. Procédé de commande selon la revendication 8, comprenant en outre : la réception, à partir du PDN, d'un paquet IP de liaison descendante du flux IP ; la récupération des informations de règle de politique et l'ajout d'un en-tête d'informations de règle de politique dans le paquet IP de liaison descendante à partir du PDN ; la transmission, sur la base des informations de règle de politique, du paquet IP de liaison descendante dans lequel l'en-tête d'informations de règle de politique a été ajouté, l'unité d'exécution de fonctions de service étant configurée pour réaliser toutes les fonctions de service dans les informations de règle de politique pour le paquet IP de liaison descendante et transmettre le paquet IP de liaison descendante dans lequel toutes les fonctions de service ont été réalisées, au premier dispositif de réseau.

10. Procédé de commande selon l'une quelconque des revendications 8 à 9, dans lequel le deuxième dispositif de réseau est une unité de fonctions de bordure de chaîne de fonctions de service et le deuxième dispositif de réseau est intégré dans un premier dispositif de réseau ou est une entité indépendante.

11. Procédé de commande d'une chaîne de fonctions de service basé sur une architecture de commande de politique et de facturation, PCC, comprenant un premier dispositif de réseau, un deuxième dispositif de réseau, un troisième dispositif de réseau et une unité d'exécution de fonctions de service,
le procédé comprenant les étapes, réalisées par le troisième dispositif de réseau, consistant à :
(i). déterminer une règle de politique d'un flux IP ; (ii). transmettre, au premier dispositif de réseau, des informations de règle de politique de la règle de politique, les informations de règle de politique comportant des informations de chaîne de fonctions de service, dans lequel les informations de chaîne de fonctions de service comprennent un ensemble ordonné de toutes les fonctions de service du flux IP.

12. Procédé de commande selon la revendication 11, dans lequel l'étape (i) comprend en outre :
la détermination, sur la base d'au moins une des conditions, d'une règle de politique, dans lequel les conditions comportent une période de temps, des informations de flux d'application, des informations de parrainage d'application, des informations de réseau, des informations d'abonné, des informations de facturation d'abonné et une politique d'opérateur.

13. Premier appareil de commande (600) d'une chaîne de fonctions de service basé sur une architecture de commande de politique et de facturation comprenant un premier dispositif de réseau, un deuxième dispositif de réseau, un troisième dispositif de réseau et une unité d'exécution de fonctions de service,
le premier appareil de commande (600) comprenant : une unité de réception (610) pour recevoir des informations de règle de politique d'un flux IP à partir du troisième dispositif de réseau, les informations de règle de politique comportant des informations de chaîne de fonctions de service ; une unité d'ajout (620) pour recevoir un paquet de liaison montante du flux IP à partir d'un UE et ajouter un en-tête d'informations de règle de politique dans le paquet de liaison montante du flux IP ; et une unité de transmission (630) pour transmettre, sur la base des informations de règle de politique, à l'unité d'exécution de fonctions de service, le paquet IP de liaison montante dans lequel l'en-tête d'informations de règle de politique a été ajouté ; l'unité d'exécution de fonctions de service étant configurée pour réaliser toutes les fonctions de service dans les informations de règle de politique pour le paquet IP de liaison montante dans lequel l'en-tête d'informations de règle de politique a été ajouté, et transmettre le paquet IP de liaison montante dans lequel toutes les fonctions de service ont été réalisées à une unité de fonctions de bordure de chaîne de fonctions de service ; une unité de suppression (640) pour recevoir un paquet IP de liaison descendante du flux IP dans lequel toutes les fonctions de service ont été réalisées, et supprimer des informations de règle de politique dans le paquet IP de liaison descendante, dans lequel les informations de chaîne de fonctions de service comprennent un ensemble ordonné de toutes les fonctions de service du flux IP.

14. Deuxième appareil de commande (700) d'une chaîne de fonctions de service basé sur l'architecture de commande de politique et de facturation, PCC, comprenant un premier dispositif de réseau, un deuxième dispositif de réseau, un troisième dispositif de réseau et une unité d'exécution de fonctions de service,
le deuxième appareil de commande (700) comprenant : une unité de réception (710) pour recevoir, à partir de l'unité d'exécution de fonctions de service, un paquet IP de liaison montante d'un flux IP et recevoir, à partir d'un PDN, un paquet IP de liaison descendante du flux IP ;
une unité de suppression et de stockage (720) pour supprimer des informations de règle de politique dans le paquet IP de liaison montante, et stocker les informations de règle de politique, dans lequel les informations de règle de politique comportent des informations de chaîne de fonctions de service ; et une unité d'ajout (730) pour récupérer les informations de règle de politique et ajouter l'en-tête d'informations de règle de politique dans le paquet IP de liaison descendante à partir du PDN ; une unité de transmission (740) pour transmettre, au PDN, le paquet IP de liaison montante dans lequel les informations de règle de politique ont été supprimées et transmettre, sur la base des informations de règle de politique, le paquet IP de liaison descendante dans lequel l'en-tête d'informations de règle de politique a été ajouté à l'unité d'exécution de fonctions de service ; dans lequel l'unité d'exécution de fonctions de service réalise toutes les fonctions de service dans les informations de règle de politique et transmet le paquet IP de liaison descendante dans lequel toutes les fonctions de service ont été réalisées, au premier dispositif de réseau, dans lequel les informations de chaîne de fonctions de service comprennent un ensemble ordonné de toutes les fonctions de service du flux IP.
